# EUROPEAN PATENT SPECIFICATION

(11) **EP 1 301 069 B1**
(45) Date of publication and mention of the grant of the patent: **11.04.2007**
(21) Application number: 01957158.7
(22) Date of filing: 16.07.2001
(51) Int. Cl.: A01K 89/06

(54) **CONVERTIBLE CHASSIS FISHING REEL**
SCHWENKBARE ANGELROLLE
MOULINET DE PECHE A CHASSIS CONVERTIBLE

(30) Priority: 14.07.2000 US 616523
(43) Date of publication of application: 16.04.2003
(73) Proprietor: Kore Gear, Inc., Destin, FL 32541 (US)
(72) Inventor: Barker, Craig H., Destin, FL 32541 (US)
(74) Representative: Perry, Robert Edward
(86) International application number: PCT/US2001/022318
(87) International publication number: WO 2002/005635

(56) References cited:
- US-A- 2 604 272
- US-A- 2 708 077

## Description

### Cross-Reference to a Related Application

This application claims the benefit of U.S. PatentApplication Serial No. 09/616,523, filed July 14, 2000.

### Field of the Invention

The present invention relates to fishing reels and, more specifically, to a convertible fishing reel where the fishing line may be cast in a manner similar to that of a spinning reel and the fishing line retrieved in a manner similar to that of a conventional reel.

### Background of the Invention

Two basic designs encompass the entire spectrum of fishing reels in use today and both have their advantages and their limitations. Traditional "spinning" (or spin-cast) reels are lightweight and designed to hang below the fishing rod for easy casting and handling while "conventional" reels are mounted above the fishing rod and are preferred when casting ofthe bait is not required.

"Conventional" reel design calls for the axis of the spool (upon which the fishing line is wound) to be perpendicular to the rod upon which the reel is mounted. This enables the spool to revolve freely in a direction parallel to that of line retrieval. This feature is attractive because it eliminates line twist, minimizes the force of friction on the line as it is wound upon the spool, and creates a smooth slip plane that provides a uniform resistive load as a hooked fish pulls line from the reel (this slip plane is hereafter referred to as "drag"). However, this same feature is also its greatest fault because it is necessary to revolve the spool in order to payout line during a cast. In this scenario, casting efficiency is directly dependent upon the weight and momentum of the bait being used. This inconsistency decreases the likelihood that constant line payout will be maintained during a cast. As a result, any slack in the line during a cast ultimately causes the loose line to wind back upon itself resulting in a "bird's-nest" tangle of the line. Furthermore, conventional reels are generally heavier in mass and are mounted on top of the rod. These limitations make cast fishing with conventional tackle extremely cumbersome, especially when trying to cast baits that are of lighter weight.

"Spinning" reels were developed to help alleviate the casting problems inherent with conventional tackle. Spinning reels are designed with a stationary, open-ended spool whose axis is parallel to the fishing rod. During a cast, the line pays out freely from the open end of the spool through the line-guides mounted on the rod. This spool orientation prevents slack in the line as it is paid out during casting effectively eliminating the backlash problem inherent in the use of conventional reels. Furthermore, spinning reels are generally lighter in weight and hang below the rod which makes casting of the bait substantially easier.

Unfortunately, while this design feature did eliminate the problems associated with the casting of conventional tackle, new problems were created. The main drawback to spinning reels is that they rely on an outer wire bail that orbits tangentially (but perpendicular to the direction of line retrieval) about the stationary spool to retrieve the line. Upon retrieval, the line is forced across the wire bail at a 90-degree angle, causing the line to twist and degrade due to the friction-associated heat.

Another major limitation of spinning reels is their inherently poor drag system design. Because the drag mechanism is forced to reside within the relatively small area of the spool housing, the diameter of the drag washers (and therefore the surface area) are severely limited relative to drag washers of conventional tackle. The washers, therefore, become subject to heat expansion during periods of stress, such as when fighting a fish. Furthermore, the drag plane is perpendicular to the direction of line retrieval. This means that when a fish overcomes the force of the drag, the line is pulled across the wire bail at 90-degrees under extreme tension. The resulting friction not only dissipates as heat, thereby quickly degrading the strength of the line, but also results in a drag that is "choppy" and generally much less consistent than the smooth drag preferred by anglers.

A number of patents describe various fishing reels, including U.S. Patent Nos. 1,001,195 . *(Gillette),* 2,439,298 *(Horan),* 4,564,158 *(Moosberg et al.),* 5,007,601 *(Emura et al.),* 5,301,899 *(Sato),* and 5, 911,378 *(Plestan).*

### Brief Summary of the Invention

The present invention remedies the aforementioned problems in the art by providing a convertible fishing reel with a unique design to allow for a more efficient line casting and line retrieval. To accomplish this, a preferred embodiment of the invention comprises two separate components, a main-body chassis and a spool chassis.

The spool chassis is connected to the main-body chassis by a pivot mount. The pivot mount allows the spool chassis to be rotated 90-degrees about a pivot relative to the direction of the fishing rod to which the main-body chassis is attached. The pivot mount can comprise at least one support arm, a pair of support arms, a bell housing, or other similar device that permits pivoting according to the invention. This allows the spool chassis to be positioned perpendicular to the direction of the fishing rod for line casting and parallel to the direction of the fishing rod for line retrieval.

To switch the fishing reel from the line retrieval position to the line casting position, the spool chassis is rotated 90-degrees and locked in position so that the spool chassis is perpendicular to the main-body chassis. As the line is released during a normal cast, the line slips off the front of the open face of the spool, as is common with a spinning reel.

When a cast is completed and the drive mechanism is engaged, the spool chassis automatically rotates 90-degrees in the opposite direction, such that the spool chassis again becomes parallel to the main-body chassis. In this position, the line is retrieved utilizing a method similar to that of conventional reels.

An objective of the subject invention is to eliminate the problems inherent in the design and use ofboth spinning and conventional fishing reels, while retaining the advantages ofboth in a single structure.

While two examples of this invention are described and illustrated herein, it should be noted and appreciated that various modifications to the inventive concepts may be apparent and obvious to those skilled in the art without departing from the spirit and scope of the invention.

Accordingly, it is an object of the present invention to provide a fishing reel having a convertible chassis.

It is a further object of the present invention to provide a fishing reel having a convertible chassis rotating between a position perpendicular to the plane of the fishing line to a position parallel to the plane of the fishing line.

It is still a further object of the present invention to provide a fishing reel having a convertible chassis rotatably affixed to at least one support arm.

It is still a further object of the present invention to provide a fishing reel having a convertible chassis rotatably affixed to at least one support arm having a drive means propagating through the pivot point on the support arm.

Further objects and advantages ofthe present invention will become apparent by reference to the following description of the preferred embodiment and appended drawings.

### Brief Description of the Drawings

The manner by which the above objects, further objects, features, and advantages of the present invention are attained will be fully apparent from the following detailed descriptions of the preferred embodiment, or example, and appended drawings wherein like reference numbers refer to the same element, component, or feature.

**Figure 1** is a left side view of the reel in line retrieval position of the first example of the present invention.

**Figure 2** is a left side view ofthe reel in casting position ofthe first example ofthe present invention.

**Figure 3** is a top view ofthe reel in line retrieval position of the first example ofthe present invention.

**Figure 4** is a top view of the reel in casting position of the first example of the present invention.

**Figure 5** is a left side cross-sectional view (along cut-line V--V) of the reel in line retrieval position showing the internal drive train of the first example of the present invention.

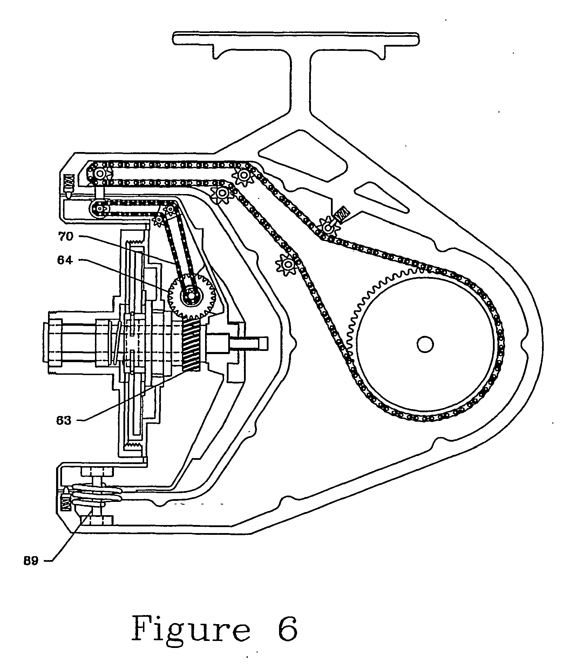

Figure 6 is a left side cross-sectional view of the reel in casting position showing the internal drive train of the first example of the present invention.

**Figure 7** is an enlarged cross-sectional side view (along cut-line VII--VII) of the spool chassis including the lever drag and drag pre-set knob as viewed from back to front of the first example of the present invention.

**Figure 8** is an enlarged cross-sectional side view (along cut-line VII-VII) of the spool chassis with the spool attached and including the lever drag and drag pre-set knob as viewed from back to front of the first example of the present invention.

**Figure 9** is a left side view of the reel in line retrieval position of the second example of the present invention.

**Figure 10** is a left side view ofthe reel in casting position ofthe second example of the present invention.

**Figure 11** is a top view ofthe reel in line retrieval position ofthe second example of the present invention.

**Figure 12** is a top view of the reel in casting position of the second example of the present invention.

**Figure 13** is a left side cross-sectional view (along cut-line V-V) of the reel in line retrieve position showing the internal drive train ofthe second example ofthe present invention.

**Figure 14** is a left side cross-sectional view of the reel in casting position showing the internal drive train of the second example of the present invention.

**Figure 15** is an enlarged cross-sectional side view (along cut-line VII--VII) of the spool chassis including the lever drag and drag pre-set knob as viewed from back to front of the second example of the present invention.

**Figure 16** is an enlarged cross-sectional side view (along cut-line VII-VII) of the spool chassis with the spool attached and including the lever drag and drag pre-set knob as viewed from back to front of the second example of the present invention.

### Detailed Description of the Invention

### Example 1

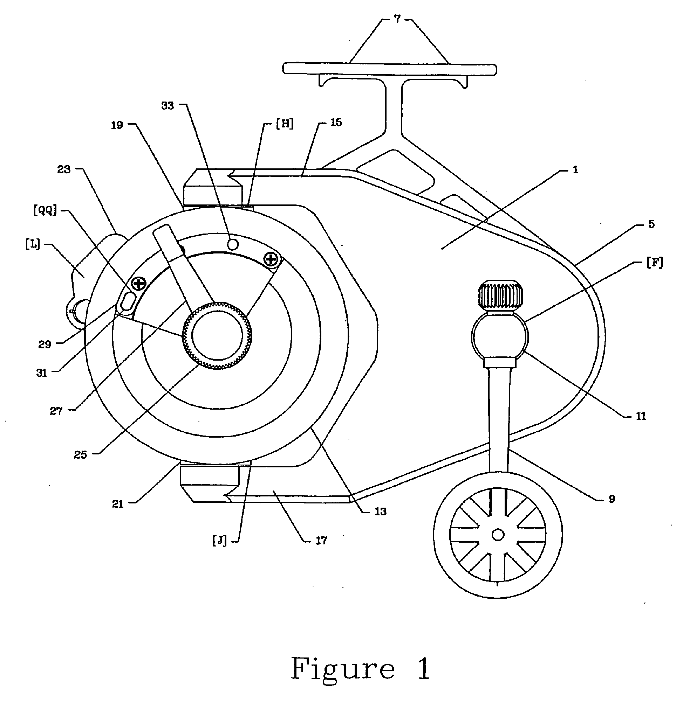

Figure 1 depicts the entire reel assembly 1 in the line retrieval position of the first preferred example of the invention. The main-body chassis **5** is constructed of two pieces (the housing and face plate) and designed to be water-resistant. The main-body chassis mount **7** is the foundation upon which the reel **1** is attached to the fishing rod (not shown). The crank handle **9** is connected to the crank assembly **11** portion of the main-body chassis **5** at point **F** such that it is easily accessible by the angler and free for rotation.

In this application, the plane of the main-body chassis is defined as being substantially parallel to the plane created by the reel's main-body chassis feet, which form the foundation upon which the reel is attached to the fishing rod (not shown). Therefore, this plane is equivalent to the plane of the fishing rod upon which the reel is mounted. The plane of the spool chassis **13** is defined as being substantially perpendicular to the spool chassis's main drive axle which forms the axis of rotation about which the spool mounting mechanism (and therefore the spool) revolve.

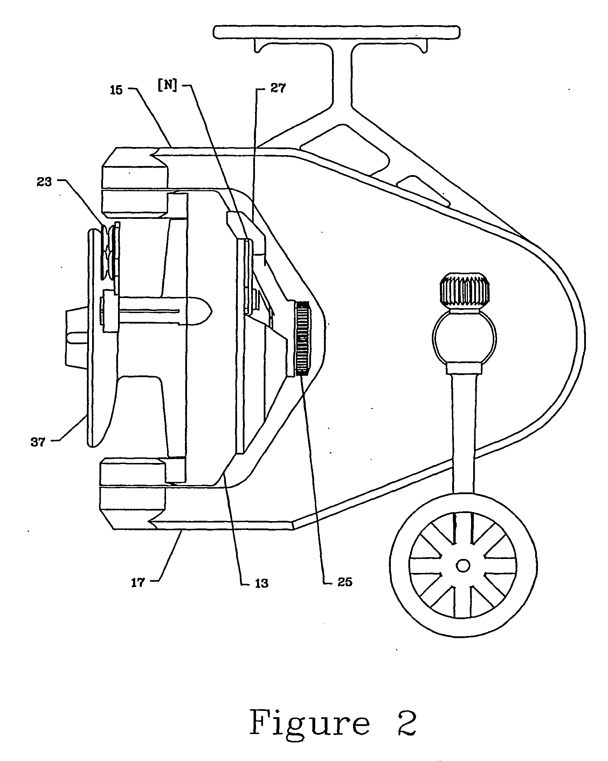

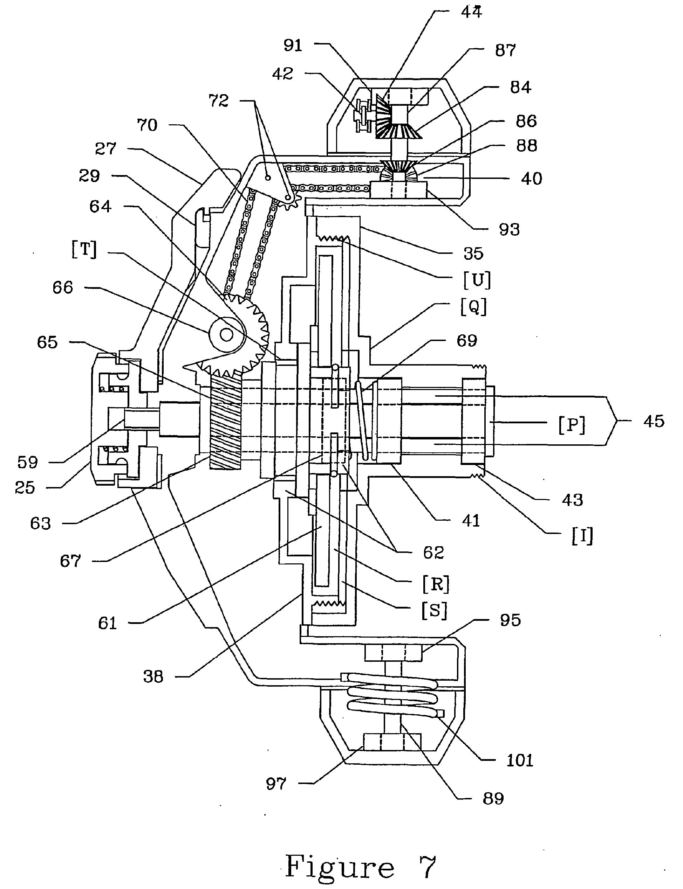

As shown in Figure 1, the spool chassis **13** is connected to the upper and lower drive support arms **15** and **17** of the main-body chassis **5** at connection points **H** and **J.** As viewed in Figure 7, the bodies are connected by vertical pins **87** and **89** that are common to, and transverse both components. The vertical pins **87** and **89** form the axis of rotation about which the spool chassis **13** revolves over a 90-degree arc within the upper and lower drive support arms **15** and **17** of the main-body chassis **5** when the angler wishes to switch from the line retrieval position (of Figure 1) to the line casting position (of Figure 2) in order to cast the line. Rubber washers **19** and **21** are positioned at points **H** and **J** between the spool chassis **13** and main-body chassis **5** to dampen any frictional forces that may occur as the angler changes the position of the spool chassis **13** when switching from the normal fishing alignment to the casting alignment. The rubber washers **19** and **21** also act as a barrier against the penetration of moisture.

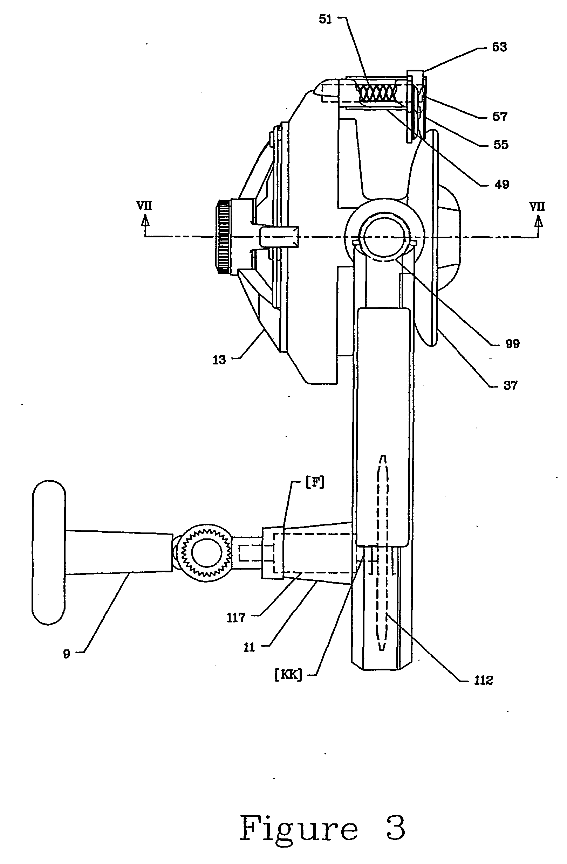

The invention can include a level-wind mechanism. In the first example cited, the level-wind mechanism **23** is an extension of the spool chassis **13,** located at position **L** near the top of the spool chassis **13.** As shown in Figure 3, the level-wind mechanism **23** comprises five inter-working parts including the outer housing **49,** the criss-crossed (helical) threaded inner track **51,** the drive sled **53,** and two small ball bearing line guides **55** and **57** that are attached to the drive sled **53.**

As shown in Figure 1, the drag pre-set knob **25** is positioned at the geographic center of the spool chassis **13** and mounted onto the end of the drag rod **59.** As best viewed in Figure 7, the drag rod **59** is a threaded member that traverses the drag pre-set knob **25,** the lever drag arm **27,** the spool chassis **13,** the helical gear **63** ofthe main drive gear assembly **62,** the spool chassis' **13** main drive axle **45,** and the spool mount mechanism **35.**

Drag rod **59** bisects the lever drag arm **27** such that the lever arm **27** is free to revolve about an axis of rotation that is positioned at the center of the spool chassis **13.** The plane of the drag rod **59** is normal to that of the lever drag arm **27,** ensuring that the lever drag arm **27** remains equidistant from the spool chassis **13** as it is pushed through its entire range of motion. An arch-shaped flange bracket **29** is mounted near the top ofthe spool chassis **13.** The flange bracket **29** interleaves within a groove in the lever drag arm **27** (Position **N** in Figure 2) and helps support the lever drag arm **27** at the top of the spool chassis **13.** The top of the flange bracket **29** may possess raised ridges or teeth that will create a "ratcheting" effect as the lever drag arm **27** is adjusted throughout its entire range of motion. Two independent push-buttons **31** and **33** protrude out of the spool chassis **13** and through the flange bracket **29.** Each push-button **31** and **33** houses an internal spring that provides counter resistance when the push-button **31** and **33** is depressed. The push buttons **31** and **33** are positioned in such a manner as to restrict the range of motion of the lever drag arm **27.**

As shown in Figure **7,** the outer end of the drag rod **59** terminates into a flattened head at position **P.** This head secures the spool mount mechanism **35** within the spool chassis **13.** The spool mount mechanism **35** is the carriage upon which the spool **37** attaches. A set of bearings **41** and **43** enable the spool mount mechanism **35** to revolve freely about the spool chassis's **13** main drive axle **45.** Thrust bearing **43** also minimizes any frictional forces present between the revolving spool mount mechanism **35** and the non-revolving flattened head ofthe drag rod **59.** A small, raised, square-shaped ridge (Position **Q** of Figure 7) is positioned around the center ofthe external surface of the spool mount mechanism **35.** This ridge is designed to interlock with the square-shaped indentation on the back-side of the spool **37.**

The spool **37** is of single-body construction. The front face of the spool **37** is smooth to allow the fishing line to pay out with minimal resistance during a cast, while the back-side contains the indentation that slides over the ridge on the external side of the spool mount mechanism **35.** When secured by the spool cap **47,** which screws onto the threads on the end of the perimeter of the spool mount mechanism **35** (Position **[I]** of Figure 7), the spool **37** locks to the spool mount mechanism **35,** effectively making the combination a single unit.

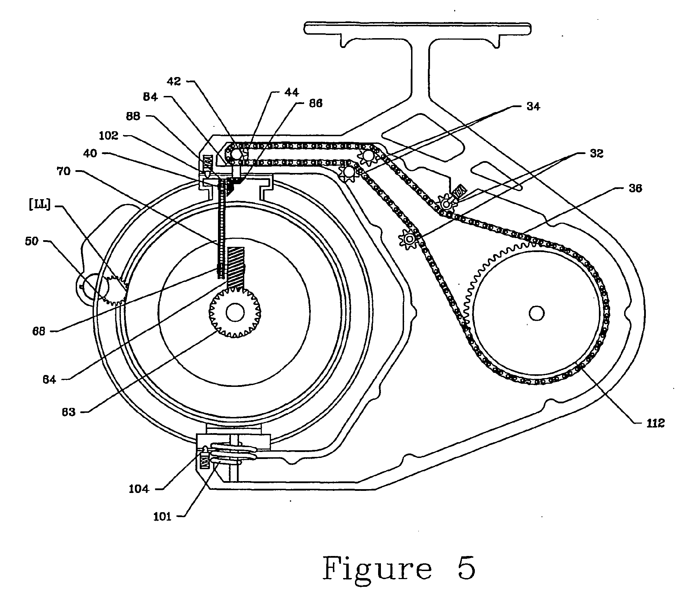

While the exterior face of the spool mount mechanism **35** possesses the raised ridge, the internal face is smooth and can be covered by an industrial felt (Position **S** of Figure 7) or other material having similar qualities. The internal face comprises one-half of the drag plane (Position **R** of Figure 7) that is created via frictional interaction between the internal face of the spool mount mechanism **35** and a smooth surface drag washer **61.** The drag washer **61** is designed to revolve about the spool chassis's main drive axle **45.** This is accomplished by virtue ofthe main drive gear assembly **62** about which the drag washer **61** is rigidly affixed. Located on the inner-most front of this assembly is the teeth of the helical gear **63** of the main drive gear assembly **62** that is driven by the chain drive mechanism as described below. Located behind the helical gear **63** of the main drive gear assembly **62** (Position **T** of Figure 7) is a recessed notch in which the internal one-half **38** of the spool mount mechanism **35** resides. This internal half **38** is essentially a large saucer-shaped washer that screws into the threads along the perimeter (Position **U** of Figure 7) of the spool mount mechanism **35.** When coupled together, the internal half **38** and the spool mount mechanism **35** effectively encase the drag washer **61** in a water-tight cavity. There is a track of continuous gear teeth along the perimeter of the outer face of the internal one-half **38** of the spool mount mechanism **35** (Position **LL** of Figure 5). These gear teeth provide power to the level-wind mechanism **23** by virtue of a gear **50** (shown in Figure 5) that is positioned between the gear teeth on the outer face of the internal one-half **38** ofthe spool mount mechanism **35** and the end of the level-wind assembly's threaded inner track **51.**

The reel drive is the means by which torque is transferred from the crank handle to the spool. The main drive gear assembly **62** rests atop a set of bearings **65** and **67.** The bearings **65** and **67** serve the dual purpose of enabling smooth axial revolution and eliminating horizontal movement of the main drive gear assembly **62,** due to their relative position within the confines of the spool chassis **13.** Positioned between the main drive gear assembly **62** and the spool mount mechanism **35** is a spring **69** that is coiled around the main drive axle **45.** The spring **69** counters the frictional forces created between the two drag surfaces as the drag is decreased. This spring **69** provides the force necessary to put the reel **1** in a free-spool mode when the lever drag arm **27** is pulled into the vertical position. This is accomplished by eliminating contact between the surfaces of the drag washer **61** and the spool mount mechanism **35.**

The helical gear **63** that is attached to the front of the main drive gear assembly **62** meshes with a second helical gear **64** who's axis is offset 90 degrees perpendicular (and non-intersecting) to that of the first helical gear **63.** The second helical gear **64** rests atop bearing **66** that acts to minimize any force of friction as the gear **64** revolves about its axis. Though a combination of helical gears is described in this example as the preferred method of transferring torque to the main drive gear assembly **62,** it should be noted that such a transfer of torque may alternately be accomplished through the use of other gear arrangements. One such arrangement includes a standard bevel set rather than the helical set as described. This is accomplished by simply offsetting the point at which the gears **63** and **64** mesh together to create a perpendicular shaft arrangement in an intersecting axis orientation as required by bevel gear or miter gear sets.

As seen in Figure 5, a chain sprocket **68** is rigidly attached to the back of, and rotates in unison with, the second helical gear **64.** The links of the spool-chassis roller chain **70** are wound about the teeth of the chain sprocket **68**. As best observed in Figure 7, the spool-chassis roller chain **70** traverses up the internal side of the spool chassis **13** and rolls across a pair of miniature chain sprockets **72** that revolve about posts protruding from near the top ofthe spool chassis **13.** The other end ofthe spool-chassis roller chain **70** winds about the lower pivot sprocket **40** that is rigidly attached to the back of, and rotates in unison with, the lower miter gear **88.** As seen in Figure 7, the lower miter gear **88** is similar in shape to a small bevel gear and forms a bevel-set style connection with the lower pivot-point gear **86.** In turn, the upper pivot-point gear **84** is positioned just above the lower pivot-point gear **86** so that the gear's **84** and **86** major diameters face each other. In turn, the upper pivot-point gear **84** forms a bevel-set style connection with upper miter gear **44.** And, like the unison of the lower miter gear **88** and the lower pivot sprocket **40,** the upper pivot sprocket **42** is rigidly affixed to the back of, and revolves in unison with, the upper miter gear **44.**

The upper and lower pivot-point gears **84** and **86** are rigidly attached about vertical pin **87** which forms the axis of rotation about which the spool chassis **13** revolves within the upper and lower drive support arms **15** and **17** of the main-body chassis **5**. As seen in Figure 7, vertical pin **87** is supported in position by a set of bearings **91** and **93.** The bearings **91** and **93** ensure that vertical pin **87,** and thus, the pivot-point gears **84** and **86** endure minimal resistance during revolution. The outer-most bearing **91** is anchored within indentations in the upper drive support arm **15,** while the inner bearing **93** is anchored within indentations of the spool chassis **13.**

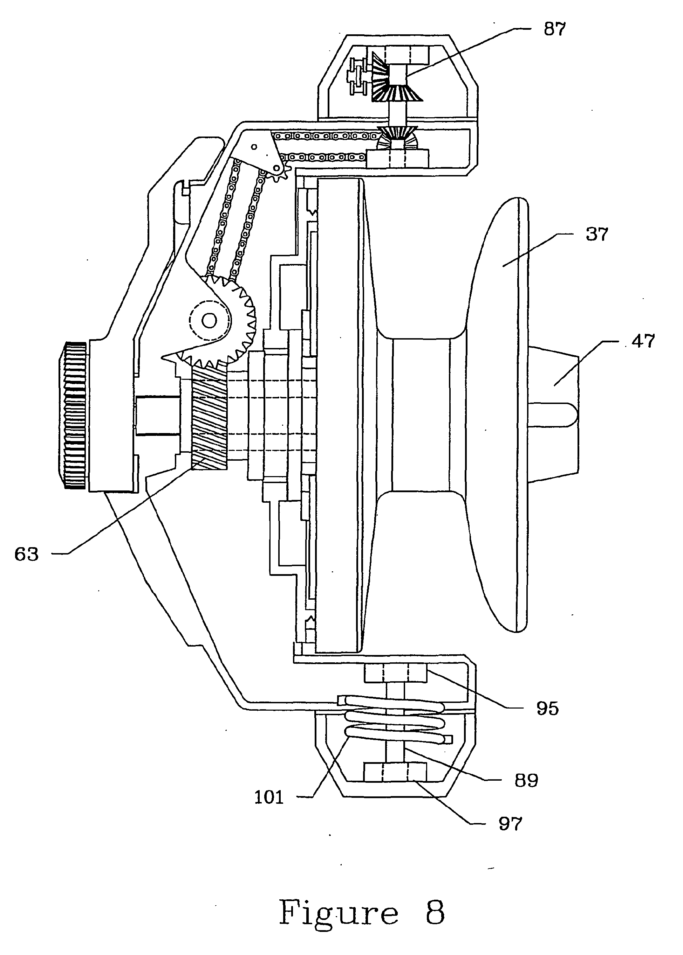

As shown in Figures 3 and 8, the clothespin springs **99** and **101** are shaped like and operate similar to the springs found at the vertex of a common clothespin. The outer legs ofthe springs **99** and **101** are attached to the upper and lower drive support arms **15** and **17.** The body of the springs **99** and **101** are coiled about the perimeter of the upper and lower pivot-point gears **84** and **86** in toward the spool chassis **13.** The inner legs of the springs **99** and **101** extend into (and are attached to) the spool chassis **13.** Because one end ofthe springs **99** and **101** is attached to the drive support arms **15** and **17,** while the other end is attached to the spool chassis **13,** they provide counter-resistance as the angler changes the position of the spool chassis **13** when switching from the normal fishing alignment to the casting alignment. Although coil springs are described in this application, counter-resistance can also be accomplished through the use of other mechanisms including other assemblies of springs whether coil, leaf, torsion, extension, compression, etc., as long as the configuration acts to oppose the rotation of the spool chassis **13** relative to the drive support arms **15** and **17.**

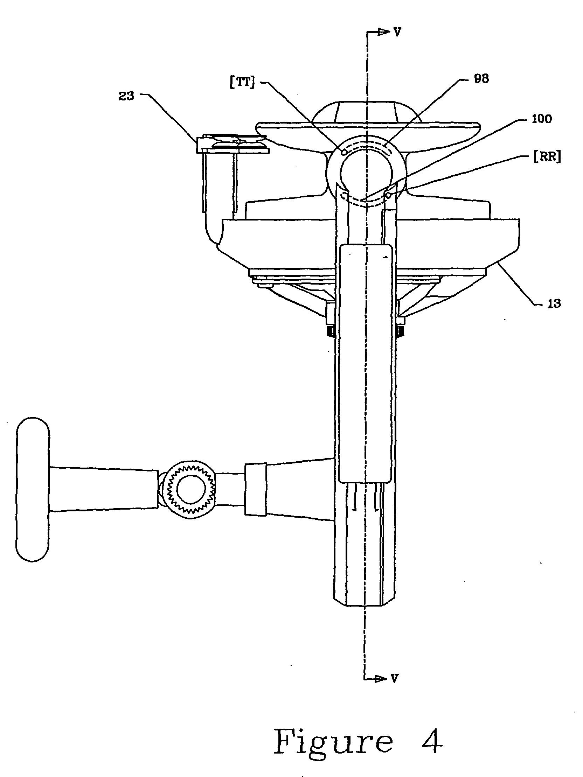

The spool chassis **13** is fixed in the line retrieval position (relative to the plane of the upper and lower drive support arms **15** and **17)** by a set of lock bearings **102** and **104** that are positioned within the upper and lower drive support arms **15** and **17,** and interact with rotation tracks **98** and **100** that are cut into the outer sides of the spool chassis **13.** As seen in Figure 5, the lock bearings **102** and **104** resemble elongated spheres and are positioned within a cavity that is bored into the upper and lower drive support arms **15** and **17** of the main-body chassis **5.** Small coil springs positioned beneath the bearings **102** and **104** in the cavity provide a vertical force upon the bearings **102** and **104,** acting to push the bearings **102** and **104** out of their cavity and into the rotation tracks **98** and **100** of the spool chassis **13.** Located at each end of the rotation track **98** and **100** (separated by 90 degrees) is a deeper depression relative to the depth ofthe rest of the track **98** and **100** as viewed in Figure 4. The lock bearings **102** and **104** are housed within these deeper depressions when the reel **1** is either in the line retrieve position or the casting position.

As depicted in Figure 5, the links ofthe main drive roller chain **36** are wrapped around the teeth of the upper pivot sprocket **42.** This chain **36** traverses the upper drive support arm **15,** crosses a pair of chain-guide sprockets **34** and enters the cavity of the main-body chassis **5** where it is guided by a pair oftensioning sprockets **32.** Ultimately, the chain **36** wraps around the teeth located on the perimeter ofthe main sprocket **112.** As the name implies, the tensioning sprockets **32** are spring activated (to oppose the natural tendency of the spring to sag under the force of gravity) so that they eliminate chain wobble and maintain constant tension on the main drive roller chain **36** as it is driven by the main sprocket **112** even though the crank handle **9** might be operated in a discontinuous or erratic fashion by the angler.

The main sprocket **112** is positioned at the geographic center of the main-body chassis **5.** The main sprocket **112** is equipped with a crank handle extension (Position **KK** of Figure 3) that protrudes from its axis of rotation and through the crank assembly **11** portion of the main-body chassis **5** at point **F** in Figure 1. The reel 1 design can be modified to accommodate use by a left-handed angler by simply switching the side of the main sprocket **112** from which the crank handle extension protrudes.

A one-way bearing **117** is positioned about the circumference of the crank handle extension ofthe main sprocket **112** and housed between the crank handle extension and the crank assembly **11** portion of the main-body chassis **5.** The one-way bearing **117** not only ensures that the main sprocket **112** endures minimal frictional resistance during revolution, but limits rotation of the main sprocket **112** to a single direction only as viewed from the perspective of Figure 2.

In operation, because the main sprocket **112** is rigidly attached to the crank handle **9,** it is revolved in a 1 to 1 ratio as the crank handle **9** is turned, while the reel **1** is in its "fishing alignment" as .depicted in Figure 1. Rotation of the main sprocket **112** produces equal propagation of the main drive roller chain **36.** In this manner, torque (resulting from the angler's revolution of the crank handle **9)** is ultimately transferred to the helical gear **63** of the main drive gear assembly **62** causing it to revolve about the main drive axle **45** (as viewed from the perspective of Figure 5). Therefore, because the circumference of the helical gear **63** affixed to the front of the main drive gear assembly **62** is approximately one-fifth the circumference ofthe main sprocket **112,** one revolution of the crank handle **9** results in approximately five systematic revolutions of the drag washer **61,** which is rigidly affixed to the main drive gear assembly **62.** Furthermore, this ratio is easily adjusted by varying the circumferences of any of these parts **(112** and **63).**

The spool **37,** which is fastened to the spool mount mechanism **35** via the spool cap **47,** is not connected to, nor driven by the drive train. Instead, it is free to revolve in either direction about the main drive axle **45.** The spool mount mechanism **35** only experiences a torque from the drive train as the lever drag arm **27** is pushed forward. This action causes the drag rod **59** to be pulled to one side (as viewed in Figure 7), thereby pulling the spool mount mechanism **35** to be within contact of the drag washer **61** (which is driven by the drive train). It is the force of friction created between the spool mount mechanism **35** and the drag washer **61** that causes the spool **37** to revolve in unison with the drive train. In this manner, the spool **37** will revolve (as viewed from the perspective of Figure 1) when the crank handle **9** is turned. Because the spool mount mechanism **35** (and therefore the spool **37)** is not directly engaged with the drive train, however, it can slip, counter to the direction of line retrieval, when the force being applied by a fish is greater than the frictional forces present between the spool mount mechanism **35** and the drag washer **61.**

Although the design of this drag assembly pulls the spool mount mechanism **35** to within contact of the rigidly positioned drag washer **61,** frictional forces between the two surfaces can be created by actually forcing (pushing) the drag washer **61** upon the spool mount mechanism **35** or via any other mechanism that creates frictional forces between the two surfaces. Furthermore, the invention does not necessarily need to incorporate a lever drag or drag pre-set knob (as described below). Any configuration (such as a "star-type" nut) that acts to pull (or push) the spool mount mechanism **35** together with the drag washer **61** thereby creating frictional forces between the members would suffice.

Although the drag mechanism described in this example is accomplished via frictional interaction between the spool mount mechanism **35** and the drag washer **61,** it should be understood that similar drag forces may also be created via any a number of alternative mechanisms including hydraulics, fluid turbines, air compression, magnetic forces, etc. without straying from the spirit or purview of the present invention.

The force of friction or "drag" between the spool mount mechanism **35** and the drag washer **61** can be easily adjusted. The adjustment is accomplished by simply pushing the lever drag arm **27** forward to increase the drag, or pulling it back again to decrease the drag. The shape and configuration ofthe concentric center (axis of rotation) of the lever drag arm **27** provides the mechanism by which the drag rod **59** is pulled in and out ofthe spool chassis **13.** The face ofthe concentric center of the lever drag arm **27** that is in contact with the spool chassis **13** is flat and smooth for ease of rotation against the body of the spool chassis **13,** while the other face is designed with a quadrant arrangement of "peaks" and "valleys." As the lever drag arm **27** is moved in one direction, the "peaking" quadrants act against the drag pre-set knob **25** (which is screwed onto the end of the drag rod **59** effectively bounding the length of the drag rod **59),** thereby forcing the drag rod **59** to be pulled to one side (as viewed in Figure 7). Conversely, as the lever drag arm **27** is moved in the opposite direction, the "valley" quadrants relax the pressure against the drag pre-set knob **25** (due to spring member **69),** enabling the drag rod **59** to slip back to the right (as viewed in Figure 7), thereby decreasing the drag.

For example, when the lever drag arm **27** is in a vertical position (90 degrees from horizontal), the spool mount mechanism **35** ceases to be in contact with the drag washer **61** freeing the spool **37** to revolve in a direction counter to that of line retrieve. This is called the "free-spool" position and is an important feature because it enables the angler to allow a fish to run with the bait (without feeling tension on the line) prior to the hook set. In the present example of the invention, the relative ease with which the line is paid out while the reel **1** is in the "free-spool" position will be controlled by the depth of the notches carved into the "valley" quadrants of the concentric center of the lever drag arm **27.** These notches will be just deep enough to allow the reel **1** to enter the free-spool mode, yet still maintain minimal contact with the drag washer **61.** Minimal contact with the drag washer **61** ensures that the line will not become tangled due to an overrun which may otherwise occur when a fish pulls line out with a sudden burst of speed.

In an alternative example ofthe invention, the relative ease with which the line is paid out when the reel **1** is in the free-spool mode can be adjusted by the angler by the addition of a free-spool tension adjustment knob. Free-spool tension can be accomplished by exerting a small but adjustable resistance between the spool cap **47** (which revolves in concert with the spool **37)** and the flattened end of the static (non-revolving) drag rod **59.** In this case, the spool cap **47** will be modified to include a free-spool tension knob located at its center. The center of the spool cap **47** can be bored and threaded to accommodate this free-spool tension knob. The thimble-shaped knob's outer perimeter contains screw threads such that the free-spool tension knob is capable of screwing in and out ofthe threads ofthe spool cap **47.** Additionally, the flattened end ofthe drag rod **59** will be extended beyond position **P** as viewed in Figure 7 and taper into a point. A coiled spring is inserted into the confines of the free-spool tension knob and followed by a bearing. These are secured within the free-spool tension knob by a washer-shaped cap that allows the bearing to be pushed into the free-spool tension knob against the compressive forces of the spring. The spool cap **47,** which contains the free-spool tension knob, is then securely fastened onto the end of the spool mount mechanism **35** in an identical nature as described in the invention. As the free-spool adjustment knob is screwed into the spool cap **47** toward the end of the tapered drag rod **59,** the compressing spring will force the bearing to exert limited resistance upon the tapered end of the non-revolving drag rod **59.** This minimal friction between the revolving spool cap **47** (which revolves in concert with the spool chassis **13** and spool **37)** and the static drag rod **59,** about which the spool chassis **13** revolves, exerts minor frictional forces which assist in eliminating overruns and tangles as line is stripped off the reel **1** (while in the free-spool mode) by a running fish. This frictional tension can be adjusted to suit the angler's preference by turning the free-spool tension knob in one direction to increase the tension and in the opposite direction to lessen it.

As the lever drag arm **27** is moved in one direction, the drag is increased until the arm **27** reaches a preset position, for example, the push button **31** at position **QQ** of Figure 1. At position **QQ,** the force of drag present between the drag washer **61** and the spool mount mechanism **35** is "normally" set equivalent to the breaking strength ofthe fishing line in use. The word "normally" is used because the drag force presented when the lever drag arm **27** meets position **QQ** is pre-set by the angler. To increase or decrease drag forces, the drag preset knob **25,** that screws onto the threads on the end of the drag rod **59,** is adjusted to suit the angler's preference.

For example, turning the drag preset knob **25** clockwise (as viewed from the perspective of Figure 1) will cause the threaded end of the drag rod **59** to be screwed into the drag preset knob **25** causing the length of the drag rod **59** to shorten- effectively pulling the flattened head of the drag rod **59** to the left in the perspective of Figure 7. This results in greater friction (or drag) between the drag washer **61** and the spool mount mechanism **35.** Conversely, turning the drag-preset knob **25** counter-clockwise will lengthen the drag rod **59** and lessen the drag between the drag washer **61** and the spool mount mechanism **35.** In this manner, adjusting the drag preset knob 25 controls the range of the drag forces bestowed by the lever drag arm **27.** By depressing the push button **31,** the lever drag arm **27** can be pushed beyond position **QQ** until it finally reaches a position where the drag washer **61** and the spool mount mechanism **35** will effectively lock together. This is useful to apply maximum pressure to a tired fish or to intentionally break the line.

As depicted in the transition between Figures 1 and 2; or 3 and 4, to cast the bait, the line is gathered, from the level-wind mechanism **23,** if provided, by the angler's finger, then the spool chassis **13** is rotated 90 degrees relative to the upper and lower drive support arms **15** and **17.** As rotational torque is applied to the spool chassis **13,** the lock bearings **102** and **104** traverse the rotation tracks **98** and **100** until they reach the depressions located at the ends of the track **98** and **100** (Positions **RR** and **TT** of Figure 4). When the bearings **102** and **104** reach this position, the force of the springs behind the bearings **102** and **104** will cause them to "snap" into the depressions, effectively locking the spool chassis **13** in the line casting position, as shown in Figure 4. The lock bearings **102** and **104** maintain the alignment of the spool **37** in either the casting position or line retrieval position. Such alignment can also be maintained by utilizing any configuration of latches, clamps, etc., as long as the spool chassis **13** is held in the casting position during a cast, and in the normal fishing alignment when retrieving the line.

When the line is released as the rod is thrust forward during a normal cast, the line is slipped off the front of the open end of the spool **37** towards the direction of the rod tip as is common with all spinning reel designs.

After the cast is completed, the line is gathered with the angler's finger and the crank handle **9** is turned. Torque exerted on the spool chassis **13** (relative to the main-body chassis 5) by the drive train, when coupled with assistance from the clothespin springs **99** and **101,** overcomes the locking resistance of the lock bearings **102** and **104,** causing the locking bearings **102** and **104** to again "snap" out of the depressions (Positions **RR** and **TT** of Figure 4) and back into the rotation track **98** and **100.** The spool chassis **13,** therefore, will automatically revert back to the normal fishing alignment (of Figures 1 and 3) by rotating 90 degrees as viewed in the perspective of Figure 3. As the spool chassis **13** completes this rotation, the level-wind mechanism **23,** if provided, will catch the line that is being held by the angler's finger. Once the level-wind mechanism **23** catches the line, the angler releases the line and normal fishing operation is resumed.

The level-wind mechanism **23** is powered by revolution of the spool mount mechanism **35** not directly by the drive train mechanism. This design ensures that line is paid onto or off of the reel **1** in an even manner any time the spool **37** is revolving, whether being driven by the drive train or revolving due to the pulling of a fish. Gear teeth carved on the outer perimeter of the internal one-half **38** ofthe spool mount mechanism **35** (See position **LL** of Figure 5) are engaged with a gear **50** that is mounted within the spool chassis **13.** The gear **50,** in turn, is engaged with the teeth on the end of the level wind assembly's **23** inner track **51.** The gear **50** turns in unison with the revolution of the spool **37** which, in turn, causes the inner track **51** to revolve within the assembly's outer housing **49.** The assembly's outer housing **49** contains a cutout section along the length of its bottom that exposes the inner track **51.** The outer surface of the inner track **51** is grooved with a continuous and symmetric helical or criss-crossed pattern that is readily viewed by observing the cutout section of Figure 3. This pattern forms a track in which the tabs (located along the inner perimeter) ofthe level-wind mechanism's **23** drive sled **53** reside. The sled **53** is sleeved about the assembly's outer housing **49** and its tab protrudes through the cut-out along the bottom of the outer housing **49** and into the criss-crossed grooves of the inner track **51.** In this manner, the drive sled **53** is guided smoothly across the length of the assembly's outer housing **49** as the inner track **51** revolves within the outer housing **49.** For example, the sled **53** slides to the right then back to the left repeatedly, evenly spanning the entire width of the spool **37.** Two small bearing line guides **55** and **57** are attached to one side of the drive sled **49** as viewed in Figure 3. Line guide **55** is attached nearer to the spool **37** and positioned lower (toward the bottom of the spool chassis **13)** than the other line guide **57.** The relative positioning of the line guides **55** and **57** create a guide for the line that enables the level-wind mechanism **23** to effectively manage and evenly distribute the line as the reel **1** is being utilized in its normal fishing alignment, yet enabling the line to be easily gathered from the level-wind assembly **23** by the angler when a cast is to be made. It should be understood, that while a level-wind mechanism is described in this invention, the function, intent and purpose of the invention remains intact with or without the inclusion of such a level-wind mechanism.

It should be noted that the effects created by the combination of miter gears and bevel gears as described in this example could easily be accomplished via other means such as the use of a single worm revolving about the axis of vertical pin **87** (to replace the upper and lower pivot-point gears **84** and **86)** and worm gears (with identical sprockets **40** and **42** attached to their back) in place of the upper and lower miter gears **44** and **88.** In fact, any mechanism that enables torque created by turning the crank handle **9** to propagate through to the main drive gear assembly **62** should be included within the purview of the appended claims.

It is important to note that while this description of the present invention includes a single drive train traversing through the upper drive support arm **15** and powering the helical gear **63** of the main drive gear assembly **62,** it is to be understood that a second parallel set (also traversing through the upper drive support arm **15)** of chains and sprockets may be incorporated without losing any of the functionality described herein or deviating from the present scope of the invention. Likewise, a second drive train (or set of drive trains) may be incorporated in addition to the upper drive train that would traverse the lower drive support arm **17** and lend power to the same helical gear **63.** An example of how such a train may be easily incorporated is described in the second example of the present invention that follows. Furthermore, another embodiment of, the present invention is easily modified to support the application of a dual- or multi-speed drive train that will enable anglers to select between alternate speeds of fishing line retrieval within the same reel. This is easily accomplished by modifying the main sprocket **112** to rigidly attach a second (or more) sprocket of a differing circumference that is capable of the same 1:1 rotation with the crank handle **9,** and, about the same axis of rotation. Next, an angler-activated shift lever is to be added. This lever is capable of shifting the main drive roller chain **36** from the original larger-diameter main sprocket **112** to the newly attached smaller one. The shifting mechanism operates in exactly the same manner as those used in common multi-speed bicycle gear shifters. It is anticipated that this modification will become a future enhancement of the invention and should be included within the spirit and purview of this application and the scope of the appended claims.

### Example 2

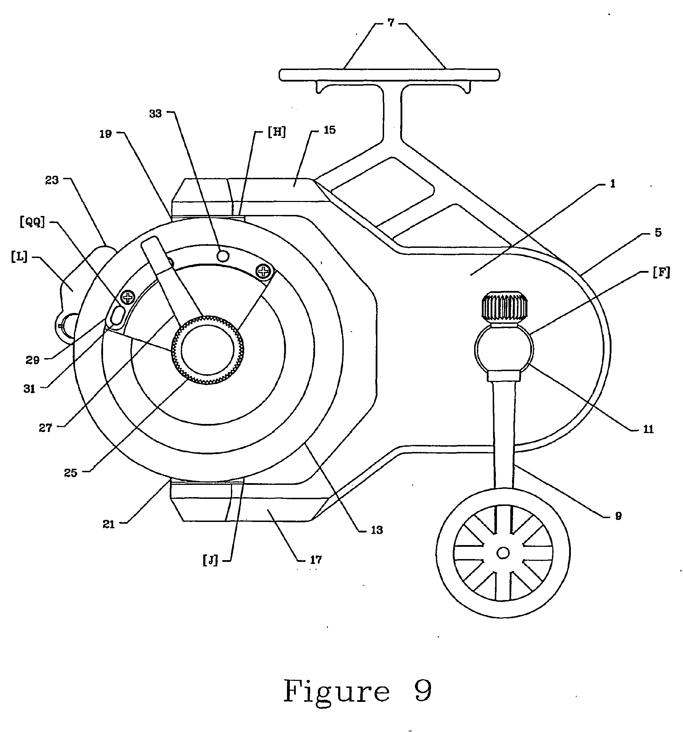

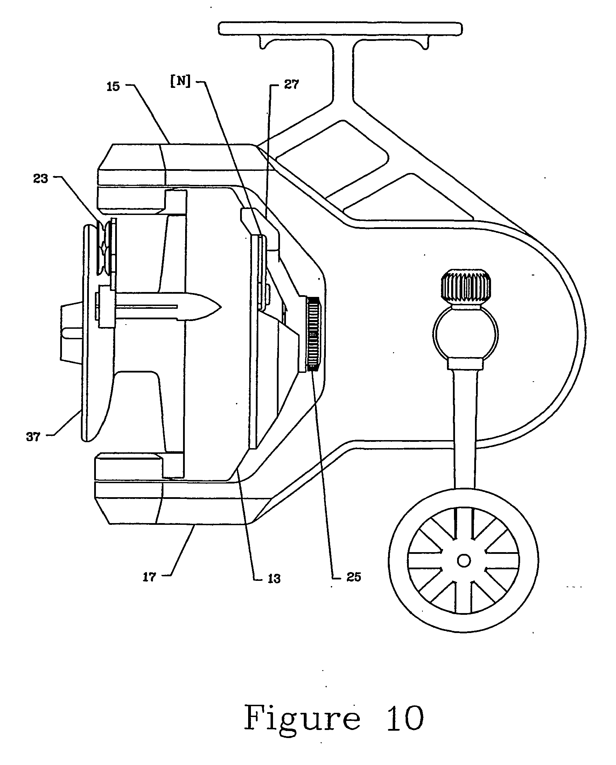

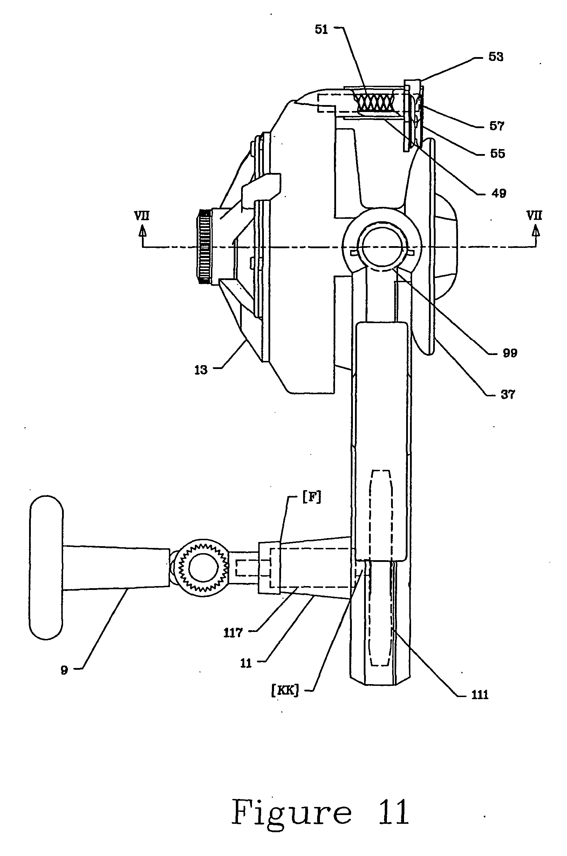

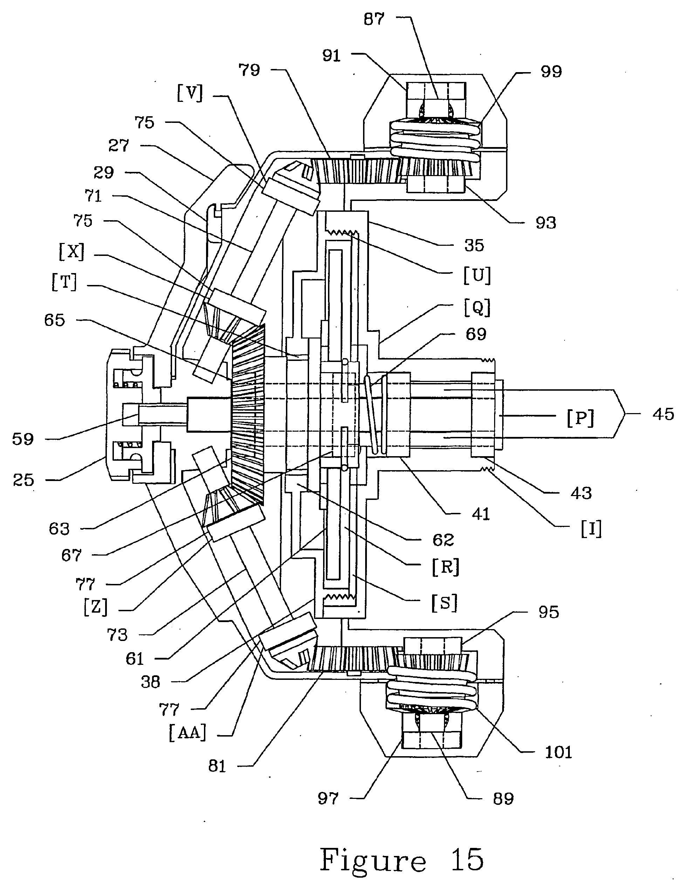

Referring now to Figure 9, this figure depicts the entire reel assembly **1** in its line retrieve position of the second example of the invention. The main-body chassis **5** is constructed of two pieces (the housing and face plate) and designed to be water resistant. The main-body chassis mount **7** is the foundation upon which the reel **1** is attached to the fishing rod. The crank handle **9** is connected to the crank assembly **11** portion ofthe main-body chassis **5** at point **F** such that it is easily accessible by the angler and free for rotation. While in the configuration depicted in Figures 9 and 11, the spool chassis **13,** and therefore, the spool **37,** is aligned parallel to the direction of line retrieve, in its normal "fishing alignment." As shown in Figure 9, the spool chassis **13** is connected to the upper and lower drive support arms **15** and **17** of the main-body chassis **5** at connection points **H** and **J.** As viewed in Figure 15, the bodies are connected by vertical pins **87** and **89** that are common to, and transverse both components. The vertical pins **87** and **89** form the axis of rotation about which the spool chassis **13** revolves over a 90-degree arc within the upper and lower drive support arms **15** and **17** of the main-body chassis 5 when the angler wishes switch from the line retrieve position (of Figure 9) to the line casting position (of Figure 10) in order to cast the line. Rubber washers **19** and **21** are positioned at points **H** and **J** between the spool chassis **13** and main-body chassis **5** to dampen any frictional forces that may occur as the angler changes the position of the spool chassis **13** when switching from the normal fishing alignment to the casting alignment. The rubber washers **19** and **21** also act as a barrier against the penetration of moisture.

The invention can include a level-winding mechanism. In one example, the level-wind mechanism **23** is an extension of the spool chassis **13,** located at position **L** near the top of the spool chassis **13.** As shown in Figure 11, the level-wind mechanism **23** comprises five inter-working parts including the outer housing **49,** the criss-crossed (helical) threaded inner track **51,** the drive sled **53,** and two small ball bearing line guides **55** and **57** that are attached to the drive sled **53.**

As shown in Figure 9, the drag pre-set knob **25** is positioned at the geographic center of the spool chassis **13** and mounted onto the end of the drag rod **59.** As best viewed in Figure 15, the drag rod **59** is a threaded member that traverses the drag pre-set knob **25,** the lever drag arm **27,** the spool chassis **13,** the spool chassis' **13** main drive axle **45,** and the spool mount mechanism **35.**

Drag rod **59** bisects the lever drag arm **27** such that the lever arm **27** is free to revolve about an axis of rotation that is positioned at the center of the spool chassis **13.** The plane of the drag rod **59** is normal to that ofthe lever drag arm **27,** ensuring that the lever drag arm **27** remains equidistant from the spool chassis **13** as it is pushed through its entire range of motion. An arch-shaped flange bracket **29** is mounted near the top of the spool chassis **13.** The flange bracket **29** interleaves within a groove in the lever drag arm **27** (Position N in Figure 10) and helps support the lever drag arm **27** at the top of the spool chassis **13.** The top of the flange bracket **29** may possess raised ridges or teeth that will create a "ratcheting" effect as the lever drag arm **27** is adjusted throughout its entire range of motion. Two independent push-buttons **31** and **33** protrude out of the spool chassis **13** and through the flange bracket **29.** Each push-button **31** and **33** houses an internal spring that provides counter resistance when the push-button **31** and **33** is depressed. The push buttons **31** and **33** are positioned in such a manner as to restrict the range of motion of the lever drag arm **27.**

As shown in Figure 15, the outer end ofthe drag rod **59** terminates into a flattened head at position **P.** This head secures the spool mount mechanism **35** within the spool chassis **13.** The spool mount mechanism **35** is the carriage upon which the spool **37** attaches. A set of bearings **41** and **43** enable the spool mount mechanism **35** to revolve freely about the spool chassis's **13** main drive axle **45.** Thrust bearing **43** also minimizes any frictional forces present between the revolving spool mount mechanism **35** and the non-revolving flattened head ofthe drag rod **59.** A small, raised, square-shaped ridge (Position **[Q]** of Figure 15) is positioned around the center of the external surface of the spool mount mechanism **35.** This ridge is designed to interlock with the square-shaped indentation on the back-side of the spool **37.**

The spool **37** is of single-body construction. The front face of the spool **37** is smooth to allow the fishing line to pay out with minimal resistance during a cast, while the back-side contains the indentation that slides over the ridge on the external side of the spool mount mechanism **35.** When secured by the spool cap **47,** which screws onto the threads on the end of the perimeter of the spool mount mechanism **35** (Position **[I]** of Figure 15), the spool **37** locks to the spool mount mechanism **35,** effectively making the combination a single unit.

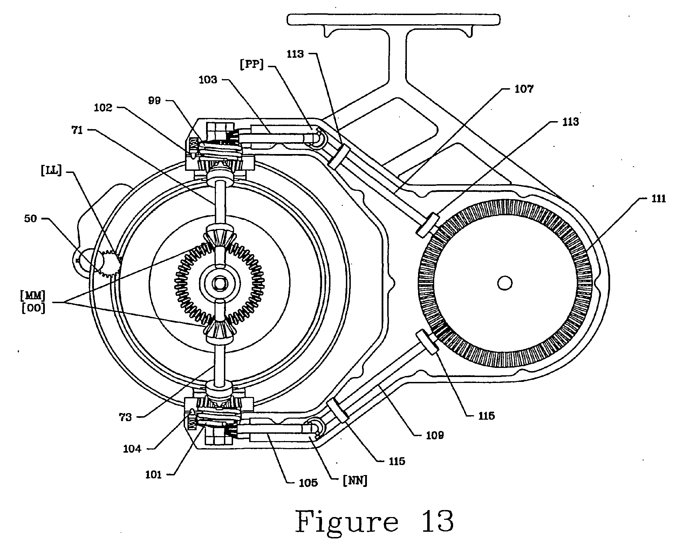

While the exterior face of the spool mount mechanism **35** possesses the raised ridge, the internal face is smooth and can be covered by an industrial felt (Position S of Figure 15) or other material with similar qualities. The internal face comprises one-half of the drag plane (Position **R** of Figure 15) that is created via frictional interaction between the internal face of the spool mount mechanism **35** and a smooth surface drag washer **61.** The drag washer **61** is designed to revolve about the spool chassis's main drive axle **45.** This is accomplished by virtue of the main drive gear assembly **63** about which the drag washer **61** is rigidly affixed. Located on the inner-most front of this assembly is the gear teeth that comprise the main drive gear **63.** Located behind the main drive gear **63** (Position T of Figure 15) is a recessed notch in which the internal one-half **38** of the spool mount mechanism **35** resides. This internal half **38** is essentially a large saucer-shaped washer that screws into the threads along the perimeter (Position U of Figure 15) of the spool mount mechanism **35.** When coupled together, the internal half **38** and the spool mount mechanism **35** effectively encase the drag washer **61** in a water-tight cavity. There is a track of continuous gear teeth along the perimeter of the outer face of the internal one-half **38** of the spool mount mechanism **35** (Position **LL** of Figure 13). These gear teeth provide power to the level-wind mechanism **23** by virtue of a gear **50** (shown in Figure 13) that is positioned between the gear teeth on the outer face of the internal one-half **38** of the spool mount mechanism 35 and the end of the level-wind assembly's threaded inner track **51.**

The main drive gear assembly **63** rests atop a set of bearings **65** and **67.** The bearings **65** and **67** serve the dual purpose of enabling smooth axial revolution and eliminating horizontal movement of the main drive gear assembly **63,** due to their relative position within the confines of the spool chassis **13.** Positioned between the main drive gear assembly **63** and the spool mount mechanism **35** is a spring **69** that is coiled around the main drive axle **45.** The spring **69** counters the frictional forces created between the two drag surfaces as the drag is decreased. This spring **69** provides the force necessary to put the reel **1** in a free-spool mode when the lever drag arm **27** is placed into the free-spool position. This is accomplished by eliminating contact between the surfaces of the drag washer **61** and the spool mount mechanism **35.**

Engaged with the main drive gear assembly **63** are the upper and lower vertical gears **71** and **73.** The upper and lower vertical gears **71** and **73** are supported in position within the spool chassis **13** by two sets of bearings **75** and **77.** The bearings **75** and **77** are positioned at each end of the vertical gears **71** and **73** (Positions **V, X, Z,** and **AA** of Figure 15) to ensure the vertical gears **71** and **73** experience minimal frictional resistance during revolution.

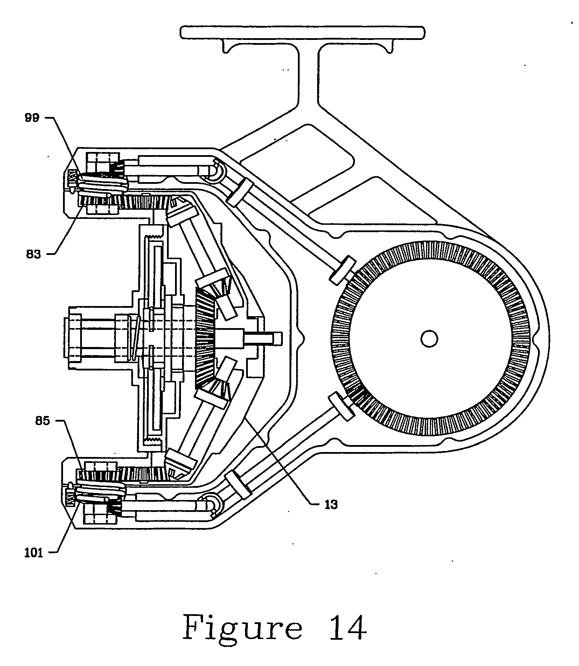

The upper and lower vertical gears **71** and **73** engage with the upper and lower spreader gears **79** and **81,** respectively, which are positioned at the very top and bottom of the spool chassis **13.** The spreader gears **79** and **81,** in turn, are engaged with the upper and lower pivot-point gears **83** and **85** along their major diameters. As shown in Figure 14, each pivot-point gear **83** and **85** is common to both the spool chassis **13** and the upper or lower drive support arm **15** and **17** of the main-body chassis **5.** The pivot-point gears **83** and **85** are shaped like a bell and are sleeved around and rotate about vertical pins **87** and **89** which form the axis of rotation about which the spool chassis **13** revolves within the upper and lower drive support arms **15** and **17** of the main-body chassis **5.** As such, the pivot-point gears **83** and **85** enable the drive train to propagate from the main-body chassis **5** through to the spool chassis **13.** The pivot-point gears **83** and **85** are designed to have two sets of gear teeth. One set is positioned along the perimeter of the major diameter ofthe pivot-point gear **83** and **85,** while the second extends radially along the horizontal plane created as the pivot-point gear **83** and **85** narrows from its major diameter to its minor diameter.

Each pivot-point gear **83** and **85** is supported in position by a set of bearings **91, 93, 95,** and **97.** The bearings **91, 93, 95,** and **97** ensure that the pivot-point gears **83** and **85** endure minimal resistance during revolution. The outer-most bearings **91** and **97** are anchored within indentations in the upper and lower drive support arms **15** and **17,** while the inner bearings **93** and **95** are anchored within indentations in the spool chassis **13.**

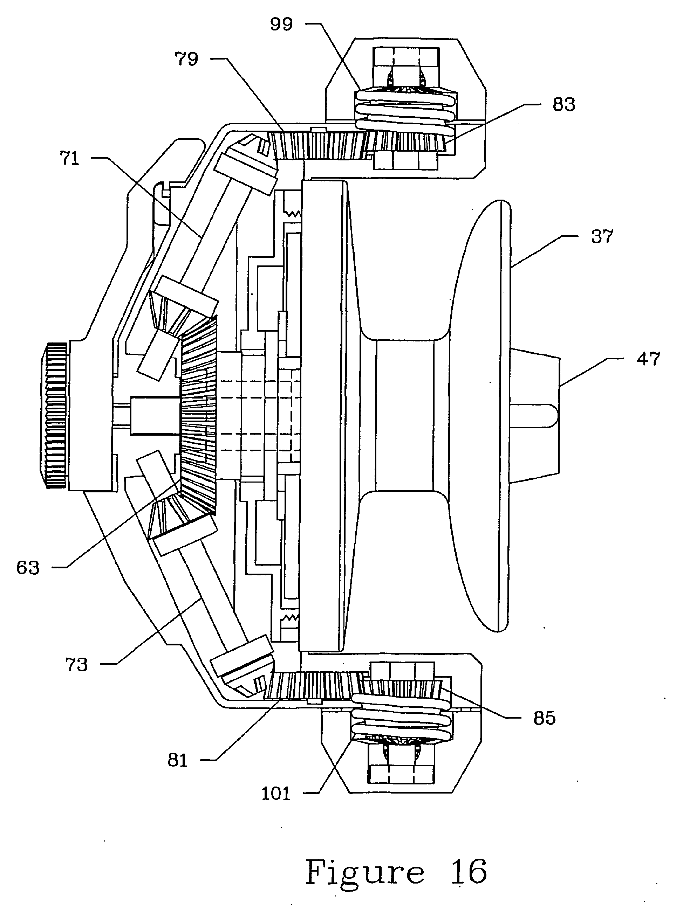

As shown in Figures 11 and 16, the clothespin springs **99** and **101** are shaped like and operate similar to the springs found at the vertex of a common clothespin. The outer legs ofthe springs **99** and **101** are attached to the upper and lower drive support arms **15** and **17.** The body ofthe springs **99** and **101** are coiled about the perimeter ofthe upper and lower pivot-point gears **83** and **85** in toward the spool chassis **13.** The inner legs of the springs **99** and **101** extend into (and are attached to) the spool chassis **13.** Because one end of the springs **99** and **101** are attached to the drive support arms **15** and **17,** while the other end is attached to the spool chassis **13,** they provide counter-resistance as the angler changes the position of the spool chassis **13** when switching from the normal fishing alignment to the casting alignment. Although coil springs are described in this application, counter-resistance can also be accomplished through the use of other mechanisms including other assemblies of springs whether coil, leaf, torsion, extension, compression, or other, as long as the configuration acts to oppose the rotation of the spool chassis **13** relative to the drive support arms **15** and **17.**

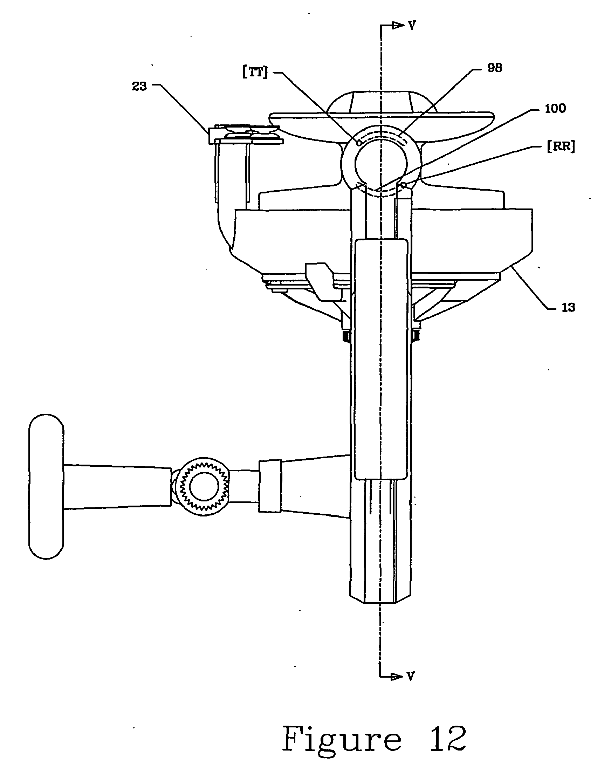

The spool chassis **13** is fixed in the line retrieve position (relative to the plane of the upper and lower drive support arms **15** and **17)** by a set of lock bearings **102** and **104** that are positioned within the upper and lower drive support arms **15** and **17,** and interact with rotation tracks **98** and **100** that are cut into the outer sides of the spool chassis **13.** As seen in Figure 13, the lock bearings **102** and **104** resemble elongated spheres and are positioned within a cavity that is bored into the upper and lower drive support arms **15** and **17** of the main-body chassis **5**. Small coil springs positioned beneath the bearings **102** and **104** in the cavity provide a vertical force upon the bearings **102** and **104,** acting to push the bearings **102** and **104** out of their cavity and into the rotation tracks **98** and **100** of the spool chassis **13.** Located at each end of the rotation track **98** and **100** (separated by 90 degrees) is a deeper depression relative to the depth of the rest of the track **98** and **100** as viewed in Figure 12. The lock bearings **102** and **104** are housed within these deeper depressions when the reel **1** is either in the line retrieve or casting position.

The extension bevel gears **90** and **92** situated on the extremities of the upper and lower extension shafts **103** and **105** are engaged with the horizontal gear face of the pivot-point gears **83** and **85** such that they form a bevel-set style connection. The opposite end of the extension shaft **103** and **105** terminates into one half of a standard U-joint connection (at points **NN** and **PP)** that is formed with the upper and lower pinion shafts 107 and 109. For reference, however, the connection between the extension shafts 103 and 105 and the pinion shafts 107 and 109 can be accomplished through any other means (such as flexible couplings, bellows couplings, helical couplings, split type couplings, disk couplings, spring couplings, ball couplings, flexible shafts, gear-to-gear connections, etc.) not just the U-joint connection described in this example, as long as the drive torque is adequately propagated through this connection.

As seen in Figure 13, the upper and lower pinion shafts **107** and **109** stretch from the termini of the extension shafts **103** and **105** (where they form the second one-half of the U-joint connection) until they form a second set of pinion-style gears **94** and **96** at their ends. The pinion gears 94 and 96 (located at the ends of the extension shafts 103 and 105) engage the main gear **111** in a bevel-set style connection. The upper pinion shaft's 107 pinion gear 94 is engaged with the gear teeth on the right-hand face ofthe main gear 111 (as viewed from an aerial perspective), while the lower pinion shaft's 109 pinion gear 96 is engaged with the opposite gear teeth on the left-hand face of the main gear 111.

The upper and lower pinion shafts 107 and 109 are supported in position by a set of bearings 113 and 115. The bearings 113 and 115 are strategically positioned at each end of the pinion shafts 107 and 109 to ensure each shaft endures minimal frictional resistance during revolution.

The main gear 111 is positioned at the geographic center of the main-body chassis 5. The main gear **111** is equipped with a crank handle extension (Position KK of Figure 11) that protrudes from its axis of rotation and through the crank assembly 11 portion of the main-body chassis **5** at point **F** in Figure 9**.** The reel **1** design can be modified to accommodate use by a left-handed angler by simply switching the side of the main gear **111** from which the crank handle extension protrudes.

A one-way bearing 117 is positioned about the circumference of the crank handle extension of the main gear 111 and housed between the crank handle extension and the crank assembly 11 portion of the main-body chassis 5. The one-way bearing 117 not only ensures that the main gear 111 endures minimal frictional resistance during revolution, but limits revolution of the main gear 111 to a single direction only as viewed from the perspective of Figure 2.

In operation, because the main gear **111** is rigidly attached to the crank handle **9,** it is revolved in a 1 to 1 ratio as the crank handle **9** is turned, while the reel **1** is in its "fishing alignment" as depicted in Figure 9. Revolution of the main gear 111 (as viewed from the perspective of Figure 13) produces an equal but opposite revolution of the upper and lower pinion shafts **107** and **109.** As can,be seen in Figure 13, opposite directions of rotation for the upper and lower drive trains is paramount because each train ultimately meets and contributes to the revolution of common gear teeth on the main drive gear assembly 63 at positions MM and OO respectively. Opposing revolution of the pinion shafts 107 and 109 is possible because the pinion gears 94 and 96 (which are located on the end of the extension shafts 103 and 105) are engaged to the opposing faces of the main gear 111. In this manner, torque (resulting from the angler's revolution of the crank handle 9) is ultimately propagated to the main drive gear assembly 63 causing it to revolve about the main drive axle 45. It is important to note that while this invention includes the description of both an upper and lower drive train, identical torque upon the main drive gear assembly 63 (about which the drag washer 61 is rigidly affixed) can be created via a single drive train as was the case described in the first example of the invention. This example includes both an upper and lower drive train for strength, support, and redundancy. Furthermore, this example of the described invention may alternately be driven via any combination of gears (spur, helical, bevel, worm, miter, etc.) chains, belts, ropes, slew drives, winches or winch drives, crawler drives, wheel drives, aerator drives, pump drives, hydraulic drives, electric drives, etc., and the design and/or sequence may vary without straying from the purview of the present invention.

Revolution of the pinion shafts **107** and **109** is evenly transferred to the upper (and lower) extension shafts **103** and **105** through the use of standard U-Joints as seen in Figure 13. In this manner, torque (resulting from the angler's revolution of the crank handle 9) is ultimately propagated to the upper and lower pivot-point gears 83 and 85 through the extension bevel gears 90 and 92 that are located on the ends of the extension shafts 103 and 105.

As depicted in Figure 15, revolution of the pivot-point gears **83** and **85** causes the upper and lower spreader gears 79 and 81 to revolve which, in turn, creates torque on the upper and lower vertical gears 71 and 73. Equal (but opposite) revolution of the vertical gears 71 and 73 ultimately forces the main drive gear assembly 63 to revolve about the main drive axle 45. Therefore, one revolution of the crank handle 9 results in approximately five systematic revolutions of the drag washer **61,** which is rigidly affixed to the main drive gear assembly **63.**

The spool 37, which is fastened to the spool mount mechanism 35 via the spool cap 47, is not connected to, nor driven by the drive train. Instead, it is free to revolve in either direction about the main drive axle 45. The spool mount mechanism 35 only experiences a torque from the drive train as the lever drag arm 27 is pushed forward. This action causes the drag rod 59 to be pulled to one side (as viewed in Figure 15), thereby pulling the spool mount mechanism 35 to be within contact of the drag washer 61 (which is driven by the drive train). It is the force of friction created between the spool mount mechanism 35 and the drag washer 61 that causes the spool 37 to revolve in unison with the drive train. In this manner, the spool 37 will revolve when the crank handle 9 is turned. Because the spool mount mechanism 35 (and therefore the spool 37) is not directly engaged with the drive train, however, it can slip, counter to the direction of line retrieve, when the force being applied by a fish is greater than the frictional forces present between the spool mount mechanism 35 and the drag washer 61.

Although the design of this drag assembly pulls the spool mount mechanism 35 to within contact of the rigidly positioned drag washer 61, frictional forces between the two surfaces can be created by actually forcing (pushing) the drag washer 61 upon the spool mount mechanism 35 or via any other mechanism that creates frictional forces between the two surfaces. Furthermore, the invention does not necessarily need to incorporate a lever drag or drag pre-set knob (as described below). Any configuration (such as a "star-type" nut) that acts to pull (or push) the spool mount mechanism 35 together with the drag washer 61 thereby creating frictional forces between the members would suffice.

Although the drag mechanism described in this example is accomplished via frictional interaction between the spool mount mechanism 35 and the drag washer 61, it should be understood that similar drag forces may also be created via any a number of alternative mechanisms including hydraulics, fluid turbines, air compression, magnetic forces, etc. without straying from the spirit or purview of the present invention.

The force of friction or "drag" between the spool mount mechanism 35 and the drag washer 61 can be easily adjusted. The adjustment is accomplished by simply pushing the lever drag arm 27 forward to increase the drag, or pulling it back again to decrease the drag. The shape and configuration of the concentric center (axis of rotation) of the lever drag arm 27 provides the mechanism by which the drag rod 59 is pulled in and out of the spool chassis 13. The face of the concentric center ofthe lever drag arm 27 that is in contact with the spool chassis 13 is flat and smooth for ease of rotation against the body of the spool chassis 13, while the other face is designed with a quadrant arrangement of "peaks" and "valleys." As the lever drag arm 27 is moved in one direction, the "peaking" quadrants act against the drag pre-set knob 25 (which is screwed onto the end of the drag rod 59, effectively bounding the length of the drag rod 59), thereby forcing the drag rod 59 to be pulled to one side (as viewed in Figure 15). Conversely, as the lever drag arm 27 is moved in the opposite direction, the "valley" quadrants relax the pressure against the drag pre-set knob 25 (due to spring member 69), enabling the drag rod 59 to slip back to the other side (as viewed in Figure 15), thereby decreasing the drag.

For example, when the lever drag arm 27 is in a vertical position (90 degrees from horizontal), the spool mount mechanism 35 ceases to be in contact with the drag washer 61 freeing the spool 37 to revolve in a direction counter to that of line retrieve. This is called the "free-spool" position and is an important feature because it enables the angler to allow a fish to run with the bait (without feeling tension on the line) prior to the hook set. In the present embodiment of the invention, the relative ease with which the line is paid out while the reel 1 is in the "free-spool" position will be controlled by the depth of the notches carved into the "valley" quadrants of the concentric center of the lever drag arm 27. These notches will be just deep enough to allow the reel 1 to enter the free-spool mode, yet still maintain minimal contact with the drag washer 61. Minimal contact with the drag washer 61 ensures that the line will not become tangled due to an overrun which may otherwise occur when a fish pulls line out with a sudden burst of speed.

In an alternative example ofthe invention, the relative ease with which the line is paid out when the reel 1 is in the free-spool mode can be adjusted by the angler by the addition of a free-spool tension adjustment knob. Free-spool tension can be accomplished by exerting a small but adjustable resistance between the spool cap 47 (which revolves in concert with the drag washer 61) and the flattened end ofthe static (non-revolving) drag rod 59. In this case, the spool cap 47 will be modified to include a free-spool tension knob located at its center. The center of the spool cap 47 can be bored and threaded to accommodate this free-spool tension knob. The thimble-shaped knob's outer perimeter contains screw threads such that the free-spool tension knob is capable of screwing in and out of the threads of the spool cap 47. Additionally, the flattened end ofthe drag rod 59 will be extended beyond (to the right of) position P as viewed in Figure 15 and taper into a point. A coiled spring is inserted into the confines of the free-spool tension knob and followed by a bearing. These are secured within the free-spool tension knob by a washer-shaped cap that allows the bearing to be pushed into the free-spool tension knob against the compressive forces of the spring. The spool cap 47, which contains the free-spool tension knob, is then securely fastened onto the end of the spool mount mechanism 35 in an identical nature as described in the invention. As the free-spool adjustment knob is screwed into the spool cap 47 toward the end ofthe tapered drag rod 59, the compressing spring will force the bearing to exert limited resistance upon the tapered end of the non-revolving drag rod 59. This minimal friction between the revolving spool cap 47 (which revolves in concert with the spool chassis 13 and spool 37) and the static drag rod 59, about which the spool chassis 13 revolves, exerts minor frictional forces which assist in eliminating overruns and tangles as line is stripped off the reel 1 (while in the free-spool mode) by a running fish. This frictional tension is easily adjusted to suit the angler's preference by turning the free-spool tension knob in one direction to increase the tension and in the opposite direction to lessen it.

As the lever drag arm 27 is moved in one direction, the drag is increased until the arm 27 reaches a preset position, for example, the push button 31 at position QQ of Figure 9. At position QQ, the force of drag present between the drag washer 61 and the spool mount mechanism 35 is "normally" set equivalent to the breaking strength ofthe fishing line in use. The word "normally" is used because the drag force presented when the lever drag arm 27 meets position QQ is pre-set by the angler. To increase or decrease drag forces, the drag preset knob 25, that screws onto the threads on the end of the drag rod 59, is adjusted to suit the angler's preference. For example, turning the drag preset knob **25** one direction (as viewed from the perspective of Figure 9) will cause the threaded end of the drag rod 59 to be screwed into the drag preset knob 25 causing the length of the drag rod 59 to shorten- effectively pulling the flattened head of the drag rod 59 (and therefore the spool mount mechanism 35) nearer to the drag washer 61. This results in greater friction (or drag) between the drag washer 61 and the spool mount mechanism 35. Conversely, turning the drag-preset knob 25 the other direction will lengthen the drag rod 59 and lessen the drag between the drag washer 61 and the spool mount mechanism 35. In this manner, adjusting the drag preset knob 25 controls the range of the drag forces bestowed by the lever drag arm 27. By depressing the push button 31, the lever drag arm 27 can be pushed beyond position QQ until it finally reaches a horizontal position, at which time the drag washer **61** and the spool mount mechanism **35** will effectively lock together. This is useful to apply maximum pressure to a tired fish or to intentionally break the line.

As depicted in the transition between Figures 9 and 10; or 11 and 12, to cast the bait, the line is gathered, from the level-wind mechanism **23,** if provided, by the angler's finger, then the spool chassis **13** is rotated 90 degrees relative to the upper and lower drive support arms **15** and **17.** As rotational torque is applied to the spool chassis **13,** the lock bearings **102** and **104** traverse the rotation tracks **98** and **100** until they reach the depressions located at the ends of the track **98** and **100** (Positions **RR** and **TT** of Figure 12). When the bearings **102** and **104** reach this position, the force of the springs behind the bearings **102** and **104** will cause them to "snap" into the depressions, effectively locking the spool chassis **13** in the line casting position, as shown in Figure 12. The lock bearings **102** and **104** maintain the alignment of the spool **37** in either the casting position or line retrieval position. Such alignment can also be maintained by utilizing any configuration of latches, clamps, etc., as long as the spool chassis **13** is held in the casting position during a cast, and in the normal fishing alignment when retrieving the line.

When the line is released as the rod is thrust forward during a normal cast, the line is slipped off the front of the open end of the spool **37** towards the direction of the rod tip as is common with all spinning reel designs.

After the cast is completed, the line is gathered with the angler's finger and the crank handle **9** is turned. The torque exerted on the spool chassis **13** (relative to the main-body chassis **5)** by the drive train, when coupled with assistance from the clothespin springs **99** and **101,** overcomes the locking resistance ofthe lock bearings **102** and **104,** causing the locking bearings **102** and **104** to again "snap" out ofthe depressions (Positions **RR** and **TT** of Figure 12) and back into the rotation track **98** and **100.** The spool chassis **13,** therefore, will automatically revert back to the normal fishing alignment (of Figures 9 and 11) by rotating 90 degrees as viewed in the perspective of Figure 11. As the spool chassis **13** completes this rotation, the level-wind mechanism **23,** if provided, will catch the line that is being held by the angler's finger. Once the level-wind mechanism **23** catches the line, the angler releases the line and normal fishing operation is resumed.

The level-wind mechanism **23** is powered by revolution of the spool mount mechanism **35,** not directly by the drive train mechanism. This design ensures that line is paid onto or off of the reel **1** in an even manner any time the spool **37** is revolving, whether being driven by the drive train or revolving due to the pulling of a fish. Gear teeth carved on the outer perimeter of the internal one-half **38** of the spool mount mechanism **35** (See position **LL** of Figure 13) are engaged with a gear **50** that is mounted within the spool chassis **13.** The gear **50,** in turn, is engaged with the teeth on the end of the level wind assembly's **23** inner track **51.** The gear **50** turns in unison with the revolution of the spool **37** which, in turn, causes the inner track **51** to revolve within the assembly's outer housing **49.** The assembly's outer housing **49** contains a cutout section along the length of its bottom that exposes the inner track **51.** The outer surface of the inner track **51** is grooved with a continuous and symmetric helical or criss-crossed pattern that is readily viewed by observing the cutout section of Figure 11. This pattern forms a track in which the tabs (located along the inner perimeter) of the level-wind mechanism's **23** drive sled **53** reside. The sled **53** is sleeved about the assembly's outer housing **49** and its tab protrudes through the cut-out along the bottom of the outer housing **49** and into the criss-crossed grooves of the inner track **51.** In this manner, the drive sled **53** is guided smoothly across the length of the assembly's outer housing **49** as the inner track **51** revolves within the outer housing **49.** For example, the sled **53** slides to the right then back to the left repeatedly, evenly spanning the entire width of the spool **37.** Two small bearing line guides **55** and **57** are attached to one side of the drive sled **49** as viewed in Figure 11. Line guide **55** is attached nearer to the spool **37** and positioned lower (toward the bottom of the spool chassis **13)** than the other line guide **57.** The relative positioning of the line guides **55** and **57** create a guide for the line that enables the level-wind mechanism **23** to effectively manage and evenly distribute the line as the reel **1** is being utilized in its normal fishing alignment, yet enabling the line to be easily gathered from the level-wind assembly **23** by the angler when a cast is to be made. It should be understood, that while a level-wind mechanism is described in this invention, the function, intent and purpose of the invention remains intact with or without the inclusion of such a level-wind mechanism.

Although the aforementioned example of the present invention utilizes a combination of gears and connection joints, it may alternately be driven via any combination of gears (spur, helical, bevel, worm, miter, etc.), chains, belts, ropes, cables, cords, bead chains, slew drives, winches or winch drives, crawler drives, wheel drives, aerator drives, pump drives, hydraulic drives, electric drives, electric motors, battery powered drives, etc. and the design and/or sequence may vary without straying from the scope of the present invention.

It should be noted that the figures described herein depict a mechanism wherein the spool chassis **13** is revolved 90-degrees "counter-clockwise" (relative to the plane of the upper and lower drive support arms **15** and **17)** when switching from the line retrieval to the line casting position, this same function may be achieved by mirroring the orientation of the spool chassis **13** (and therefore the spool **37)** such that it requires a "clockwise" rotation of the spool chassis **13** to switch from the line retrieval position to the casting position. Additionally, it is possible to alter the vertical axis of rotation (as formed by vertical pins **87** and **89)** upon which the spool chassis **13** rotates 90-degrees within the upper and lower drive support arms **15** and **17** of the main-body chassis **5** such that it becomes a horizontal axis of rotation. In this scenario, the upper and lower drive support arms **15** and **17,** and therefore vertical pins **87** and **89,** are arranged in a horizontal fashion such that the spool chassis **13** is capable of 90-degree rotation about a horizontal axis. In each case, the same effects are achieved as the examples described herein and these modifications do not deviate from scope of the original invention, and therefore, should be included in the purview of the attached claims.

The foregoing disclosure is the applicant's description of the best mode in which to practice this invention. Fishing reels incorporating modifications and variations will become obvious to one skilled in the fishing reel art. While the foregoing disclosure is intended for one skilled in the pertinent art to practice the invention, it should not be construed as being limited thereby. Instead the present invention should be construed to include any obvious variations and be limited only by the scope of the following claims.

## Claims

1. A convertible chassis fishing reel with rotatable spool chassis, for selective line casting and retrieval, comprising:
a main body chassis (5) comprising a reel drive, a pivot mount, and a main body chassis mount;
a spool chassis (13) comprising a spool mounting mechanism (35) for receiving a spool (37) and pivotally connected to the pivot mount at a pivot point, wherein the spool chassis can be selectively rotated between a first position and a second position within the main-body chassis (5), and wherein the orientation of the spool chassis in the first position is substantially normal to the orientation of the spool chassis about the pivot point in the second position; and
wherein the reel drive communicates through the pivot point with the spool mounting mechanism causing said spool mounting mechanism to rotate.

2. A fishing reel according to claim 1, further comprising a crank handle affixed to the reel drive.

3. A fishing reel according to claim 1, wherein the reel drive comprises an anti-reverse mechanism.

4. A fishing reel according to claim 1, wherein the reel drive communicates with the spool mounting mechanism by a drive system selected from chains, sprockets, gears, belts, cables, cords, bead chains, ropes, slew drives, winches, winch drives, crawler drives, wheel drives, aerator drives, pump drives, hydraulic drives, fluid drives, turbines, electric rives, electric motors, and battery drives.

5. A fishing reel according to claim 1, further comprising a spool removably attached to the spool mounting mechanism.

6. A fishing reel according to claim 1, further comprising a level-wind mechanism operably connected to the spool chassis.

7. A fishing reel according to claim 6, wherein the level-wind mechanism is in communication with the reel drive.

8. A fishing reel according to claim 1, further comprising an adjustable drag assembly operably connected to the spool chassis

9. A fishing reel according to claim 8, wherein the adjustable drag assembly further comprises a drag lever arm.

10. A fishing reel according to claim 8, wherein the adjustable drag assembly further comprises a drag-present knob.

11. A fishing reel according to claim 8, wherein the adjustable drag assembly further comprises a free spool tension-adjusting knob.

## Patentansprüche

1. Schwenkbare Angelrolle mit drehbarem Spulenrahmen zum selektiven Auswerfen und Einholen der Angelschnur, umfassend
einen Hauptkörperrahmen (5), umfassend einen Rollenantrieb, ein Schwenklager und ein Lager für den Hauptkörperrahmen;
einen Spulenrahmen (13), umfassend einen Spulen-Lagermechanismus (35) zum Aufnehmen einer Spule (37) der schwenkbar an einem Schwenkpunkt mit dem Schwenklager verbunden ist, wobei der Spulenrahmen innerhalb des Hauptkörperrahmens (5) wahlweise zwischen einer ersten Stellung und einer zweiten Stellung gedreht werden kann und wobei die Ausrichtung des Spulenrahmens in der ersten Stellung im wesentlichen senkrecht zu der Ausrichtung des Spulenrahmens um den Schwenkpunkt in der zweiten Stellung ist; und
wobei der Rollenantrieb durch den Schwenkpunkt mit dem Spulenlagermechanismus in Verbindung steht und so bewirkt, dass sich der Spulenlagermechanismus dreht.

2. Angelrolle gemäß Anspruch 1, ferner umfassend eine an dem Rollenantrieb befestigte Kurbel.

3. Angelrolle gemäß Anspruch 1, wobei der Rollenantrieb einen Rücklauf-Sperrmechanismus aufweist.

4. Angelrolle gemäß Anspruch 1, wobei der Rollenantrieb mit dem Spulenlagermechanismus mittels eines Antriebssystems, ausgewählt aus Ketten, Stachelrädern, Zahnrädern, Bändern, Kabeln, Schnüren, Wulstketten, Seilen, Drehwerksantrieben, Winschen, Haspelantrieben, Raupenantrieben, Radantrieben, Luftströmungsantrieben, Pumpantrieben, hydraulischen Antrieben, Fluidantrieben, Turbinen, elektrischen Antrieben, Elektromotoren und Batterieantrieben, in Verbindung steht.

5. Angelrolle gemäß Anspruch 1, ferner umfassend eine abnehmbar an dem Spulenlagermechanismus befestigte Spule.

6. Angelrolle gemäß Anspruch 1, ferner umfassend einen betriebsfähig mit dem Spulenrahmen verbundenen Horizontalwickelmechanismus.

7. Angelrolle gemäß Anspruch 6, wobei der Horizontalwickelmechanismus in Verbindung mit dem Rollenantrieb steht.

8. Angelrolle gemäß Anspruch 1, ferner umfassend eine betriebsfähig mit dem Spulenrahmen verbundene einstellbare Mitziehanordnung.

9. Angelrolle gemäß Anspruch 8, wobei die einstellbare Mitziehanordnung ferner einen Mitzieh-Hebelarm umfasst.

10. Angelrolle gemäß Anspruch 8, wobei die einstellbare Mitziehanordnung ferner einen Handgriff zum Aktivieren des Nachziehens umfasst.

11. Angelrolle gemäß Anspruch 8, wobei die einstellbare Mitziehanordnung ferner einen Handgriff zum Einstellen von Spulenspannungsfreiheit umfasst.

## Revendications

1. Moulinet de pêche à châssis convertible avec un châssis de tambour pouvant pivoter, selon le choix du lancer et du ramener de la ligne, comprenant:
un châssis (5) du corps principal comprenant un entraînement du moulinet, un support de pivot, et un support du châssis du corps principal;
un châssis (13) du tambour comprenant un mécanisme (35) de support du tambour pour recevoir un tambour (37) et relié en pouvant pivoter au support de pivot en un point de pivot, dans lequel le châssis du tambour peut être pivoté au choix entre une première position et une seconde position à l'intérieur du châssis (5) du corps principal, et dans lequel l'orientation du châssis du tambour dans la première position est en substance perpendiculaire à l'orientation du châssis du tambour autour du point de pivot dans la seconde position; et
dans lequel l'entraînement du moulinet est en connexion via le point de pivot avec le mécanisme de support du tambour obligeant ledit mécanisme de support du tambour à pivoter.

2. Moulinet de pêche selon la revendication 1, comprenant en outre une poignée de manivelle fixée à l'entraînement du moulinet.

3. Moulinet de pêche selon la revendication 1, dans lequel l'entraînement du moulinet comprend un mécanisme anti-retour.

4. Moulinet de pêche selon la revendication 1, dans lequel l'entraînement du moulinet est en connexion avec le mécanisme de support du tambour au moyen d'un dispositif d'entraînement choisi parmi des chaînes, pignons, roues dentées, courroies, câbles, cordes, chaînes à billes, cordages, entraînements d'orientation, treuils, entraînements de treuils, entraînements par chenilles, entraînements par roues, entraînements pneumatiques, entraînements par pompe, entraînements hydrauliques, entraînements par fluide, turbines, entraînements électriques, moteurs électriques, et entraînements par batterie.

5. Moulinet de pêche selon la revendication 1, comprenant en outre un tambour fixé de manière démontable au mécanisme de support du tambour.

6. Moulinet de pêche selon la revendication 1, comprenant en outre un mécanisme de bobinage en couches relié de manière fonctionnelle au châssis du tambour.

7. Moulinet de pêche selon la revendication 6, dans lequel le mécanisme de bobinage en couches est en connexion avec l'entraînement du tambour.

8. Moulinet de pêche selon la revendication 1, comprenant en outre un dispositif de frein réglable relié de manière fonctionnelle au châssis du tambour.

9. Moulinet de pêche selon la revendication 8, dans lequel le dispositif de frein réglable comprend en outre un bras de levier du frein.

10. Moulinet de pêche selon la revendication 8, dans lequel le dispositif de frein réglable comprend en outre un bouton de l'activation du frein.

11. Moulinet de pêche selon la revendication 8, dans lequel le dispositif de frein réglable comprend en outre un bouton de réglage de la tension quand le tambour est libre.
